(19)

Europäisches
Patentamt
European
Patent Office
Office européen
des brevets

(11) **EP 4 142 126 A1**

(12) **EUROPEAN PATENT APPLICATION**
published in accordance with Art. 153(4) EPC

(43) Date of publication:
**01.03.2023 Bulletin 2023/09**

(21) Application number: **21793494.2**

(22) Date of filing: **02.03.2021**

(51) International Patent Classification (IPC):
**H02K 37/04** $^{(2006.01)}$

(52) Cooperative Patent Classification (CPC):
**H02K 37/04**

(86) International application number:
**PCT/JP2021/008000**

(87) International publication number:
**WO 2021/215117 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020 JP 2020077740**

(71) Applicant: **Oriental Motor Co., Ltd.**
**Tokyo 111-0056 (JP)**

(72) Inventor: **UMINO, Hikaru**
**Tsukuba-shi, Ibaraki 300-2635 (JP)**

(74) Representative: **Witte, Weller & Partner**
**Patentanwälte mbB**
**Postfach 10 54 62**
**70047 Stuttgart (DE)**

(54) **STEPPING MOTOR**

(57)     A stepping motor includes a stator, and a rotor disposed in opposed relation to the stator and movable in a predetermined movement direction. The stator has a plurality of main poles, windings for the respective main poles, a plurality of stator teeth disposed on each of the main poles and spaced circumferentially from each other, and stator slots provided between respective adjacent pairs of the stator teeth. The rotor has a plurality of rotor teeth spaced from each other in the movement direction, and rotor slots provided between respective adjacent pairs of the rotor teeth. Slot magnets of hard magnetic inserts each magnetized in a slot depth direction are respectively provided in the stator slots and/or the rotor slots. The slot magnets each have a width that is 60% to 80% of the width of each of the slots as measured in the movement direction.

FIG. 2

EP 4 142 126 A1

**Description**

TECHNICAL FIELD

The present invention relates to a stepping motor.

BACKGROUND ART

Hybrid type stepping motors generally include a rotor including a pair of rotor segments each having a plurality of rotor teeth circumferentially provided at a constant interval, and a disk-shaped magnet held between the pair of rotor segments. A stator is provided around the rotor. The stator has a plurality of main poles, and the main poles each include a plurality of stator teeth provided in opposed relation to the rotor. The stator teeth are circumferentially provided at the same interval as the rotor teeth. The maximum torque of such a hybrid type stepping motor is limited by magnetic saturation between the stator teeth and the rotor teeth.

PTL 1 discloses a stepping motor configured such that permanent magnets are respectively inserted in slots provided between adjacent rotor teeth and/or between adjacent stator teeth. This configuration provides a magnetic structure which reduces the magnetic saturation to ensure effective utilization of generated magnetic fluxes, making it possible to increase the maximum torque. That is, the permanent magnets embedded in the respective slots suppress the leakage of the magnetic fluxes to concentrate air gap magnetic fluxes between the stator teeth and the rotor teeth, thereby contributing to the increase of the torque generation.

PTL 1 states that there is a certain correlation between the holding force of a permanent magnet inserted in a slot and the ratio of a slot depth to a slot width (depth/width ratio) and, therefore, an optimum depth/width ratio is present (line 37 in the left column to line 18 in the right column of page 6 in PTL 1).

CITATION LIST

PATENT LITERATURE

PTL 1: JP-B-HEI7(1995)-8126

SUMMARY OF INVENTION

PROBLEM TO BE SOLVED BY INVENTION

When the stepping motor having the configuration described in PTL 1 is produced, a basic design guideline is to put the permanent magnets in the respective slots as tightly as possible. This is supposedly because the torque can be advantageously increased by increasing the magnetic fluxes as much as possible.

However, the inventor of the present invention precisely analyzed the flow of the magnetic fluxes around the gap between the rotor and the stator and, as a result, found that the conventional basic design guideline is not necessarily optimum for maximization of the torque. Specifically, the inventor found that some of magnetic fluxes generated by magnets provided in the slots of one of the rotor and the stator do not reach the other of the rotor and the stator but return to the one. Such magnetic fluxes are ineffective magnetic fluxes that are not contributable to the torque.

Based on the conventionally unknown findings described above, an embodiment of the present invention provides a stepping motor configured to be capable of effectively increasing the torque.

SOLUTION TO PROBLEM

The embodiment of the present invention provides a stepping motor which includes a stator, and a moving element disposed in opposed relation to the stator and movable in a predetermined movement direction with respect to the stator. The stator has a plurality of main poles, windings for the respective main poles, a plurality of stator teeth disposed on each of the main poles in opposed relation to the moving element and spaced from each other in the movement direction, and stator slots provided between respective adjacent pairs of the stator teeth. The moving element has a plurality of moving element teeth disposed in opposed relation to the stator and spaced from each other in the movement direction, and moving element slots provided between respective adjacent pairs of the moving element teeth. Slot magnets of hard magnetic inserts (inserts of a hard magnetic material) each magnetized in a slot depth direction are respectively provided in the stator slots and/or the moving element slots. The slot magnets preferably each have a width that is 60% to 80% of the width of each of the slots as measured in the movement direction.

The moving element teeth may be linear projections each extending in a direction intersecting the movement direction. The stator teeth may be linear projections each extending in the direction intersecting the movement direction. The moving element teeth and the stator teeth may extend parallel to each other. The moving element teeth may be opposed to and spaced from the stator teeth in an opposed direction perpendicular to the movement direction and the intersecting direction with a gap. The opposed direction may be parallel to the slot depth direction.

The moving element may be a rotor which is rotatable about a predetermined rotation axis. In this case, the movement direction may be a circumferential direction about the rotation axis.

The slot magnets may include stator slot magnets of hard magnetic inserts each magnetized in a stator slot depth direction and respectively provided in the stator slots. Further, the slot magnets may include moving element slot magnets of hard magnetic inserts each magnetized in a moving element slot depth direction and respectively provided in the moving element slots. The stator slot magnets and the moving element slot magnets may be magnetized so that, when the stator slot magnets are opposed to the moving element slot magnets, the opposed magnets have opposite polarities (different polarities).

The stator slot magnets may be opposed to and spaced from the moving element slot magnets with a gap. This gap may be not greater than the gap between the moving element teeth and the stator teeth.

The slot magnets may include samarium magnets.

The slot magnets may include neodymium magnets.

The foregoing and other objects, features, and effects of the present invention will become more apparent from the following description of embodiments with reference to the attached drawings.

BRIEF DESCRIPTION OF DRAWINGS

FIG. 1 is a perspective view for describing the structure of a stepping motor according to an embodiment of the present invention.

FIG. 2 is an exploded perspective view for describing the structures of a stator and a rotor.

FIG. 3 is a partial enlarged sectional view showing rotor teeth and stator teeth on an enlarged scale.

FIG. 4 shows the result of the analysis of the flow of magnetic fluxes around the rotor teeth and the stator teeth by way of example.

FIG. 5A shows the results of the analysis of a change in generated torque with respect to a magnet width ratio where neodymium magnets were used.

FIG. 5B shows the results of the analysis of a change in generated torque with respect to a magnet width ratio where some other neodymium magnets were used.

FIG. 5C shows the results of the analysis of a change in generated torque with respect to a magnet width ratio where samarium magnets were used.

FIG. 6 shows the results of the analysis of a change in generated torque with respect to a magnet width ratio where a different height/width ratio was employed.

FIG. 7 shows the results of the measurement of current-torque characteristics according to examples.

FIG. 8 shows the results of the measurement of current-torque characteristics according to other examples.

DESCRIPTION OF EMBODIMENTS

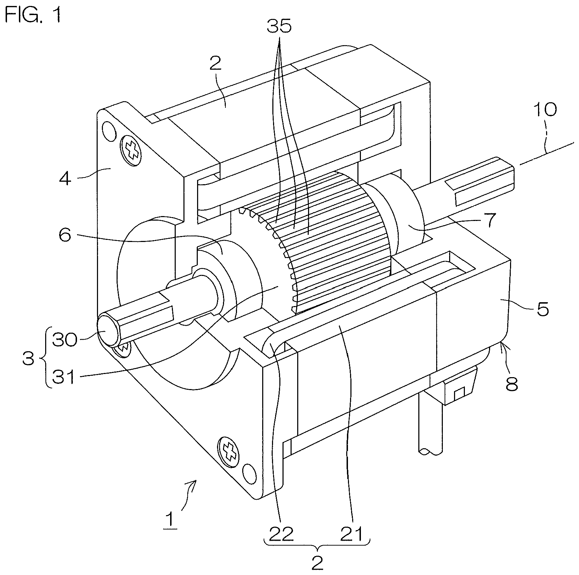

FIG. 1 is a perspective view for describing the structure of a stepping motor according to one embodiment of the present invention. The stepping motor 1 includes a stator 2, a rotor 3 (moving element), a motor flange 4, a bracket 5, and a pair of bearings 6, 7.

The stator 2 includes a stator iron core 21 and windings 22. The motor flange 4 and the bracket 5 are fixed to opposite ends of the stator iron core 21, and these members constitute a motor case 8.

The rotor 3 is disposed within the motor case 8 rotatably about a rotation axis 10. The rotor 3 includes a rotation shaft 30 extending along the rotation axis 10, and a rotor iron core 31 supported by the rotation shaft 30. The rotation shaft 30 is supported rotatably by the pair of bearings 6, 7. One of the bearings (bearing 6) is attached to the motor flange 4, and the other bearing 7 is attached to the bracket 5.

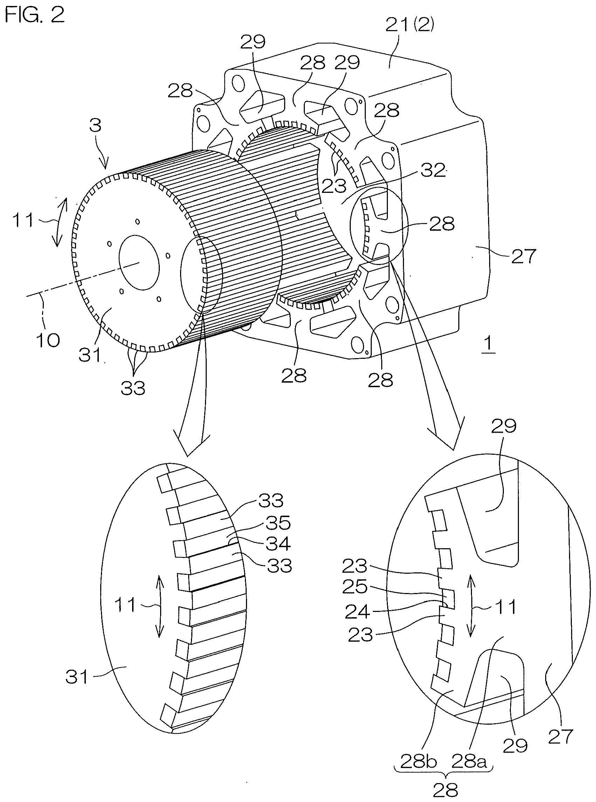

FIG. 2 is an exploded perspective view for describing the structures of the stator 2 and the rotor 3.

Rotor teeth 33 (moving element teeth) are provided equidistantly at a predetermined tooth pitch in a circumferential direction 11 on the outer peripheral surface of the rotor iron core 31. The rotor teeth 33 each extend parallel to the rotation axis 10. Alternatively, the rotor teeth 33 may each be inclined with respect to the rotation axis 10.

Rotor slots 34 are provided between respective adjacent pairs of the rotor teeth 33. Rotor slot magnets 35 (moving element slot magnets) are respectively inserted in the rotor slots 34. The rotor slot magnets 35 are rod-shaped hard magnetic inserts (typically, permanent magnet pieces) respectively extending along the rotor slots 34. The rotor slot magnets 35 are respectively fixed within the rotor slots 34, for example, with an adhesive.

The stator iron core 21 includes a frame-shaped back yoke 27, and a plurality of main poles 28. The main poles 28 each extend from the back yoke 27 toward the rotor iron core 31, and are spaced from each other in the circumferential direction 11 to surround the rotor iron core 31. Thus, the main poles 28 define a rotor accommodation space 32 having a generally hollow cylindrical shape about the rotation axis 10. The windings 22 (see FIG. 1, not shown in FIG. 2) are respectively wound around the main poles 28.

The main poles 28 each have a support portion 28a connected to the back yoke 27, and an opposed portion 28b connected to a distal end of the support portion 28a. The opposed portion 28b faces the rotor accommodation space 32 and, therefore, is opposed to the rotor iron core 31. The opposed portion 28b extends in the circumferential direction 11 to the opposite sides of the support portion 28a. Thus, winding slots 29 are provided between respective circumferentially-adjacent pairs of the main poles 28. The windings 22 are accommodated in these winding slots 29. The opposed portion 28b has an opposition surface which is opposed to the rotor iron core 31. The opposition surface is formed with a plurality of stator teeth 23 which project toward the rotation axis 10. The stator teeth 23 are provided equidistantly at a predetermined tooth pitch in the circumferential direction 11. The stator teeth 23 extend along the rotation axis 10 so as to correspond to the rotor teeth 33. Where the rotor teeth 33 are inclined with respect to the rotation axis 10, the stator teeth 23 are correspondingly inclined with respect to the rotation axis 10.

Stator slots 24 are provided between respective adjacent pairs of the stator teeth 23. Stator slot magnets 25 are respectively inserted in the stator slots 24. The stator slot magnets 25 are rod-shaped hard magnetic inserts (typically, permanent magnet pieces) respectively extending along the stator slots 24. The stator slot magnets 25 are respectively fixed within the stator slots 24, for example, with an adhesive.

The rotor slot magnets 35 and the stator slot magnets 25 are each magnetized radially of the rotation axis 10. The expression "radially of the rotation axis 10" means "perpendicularly to the rotation axis 10." Therefore, the rotor slot magnets 35 are each magnetized along the depth of the rotor slot 34. Further, the stator slot magnets 25 are each magnetized along the depth of the stator slot 24. The magnetization directions of the rotor slot magnets 35 are respectively same as the magnetization directions of the stator slot magnets 25 radially of the rotation axis 10. With the rotor slot magnets 35 opposed to the stator slot magnets 25, therefore, the polarities of the rotor slot magnets 35 are opposite from the polarities of the opposed stator slot magnets 25.

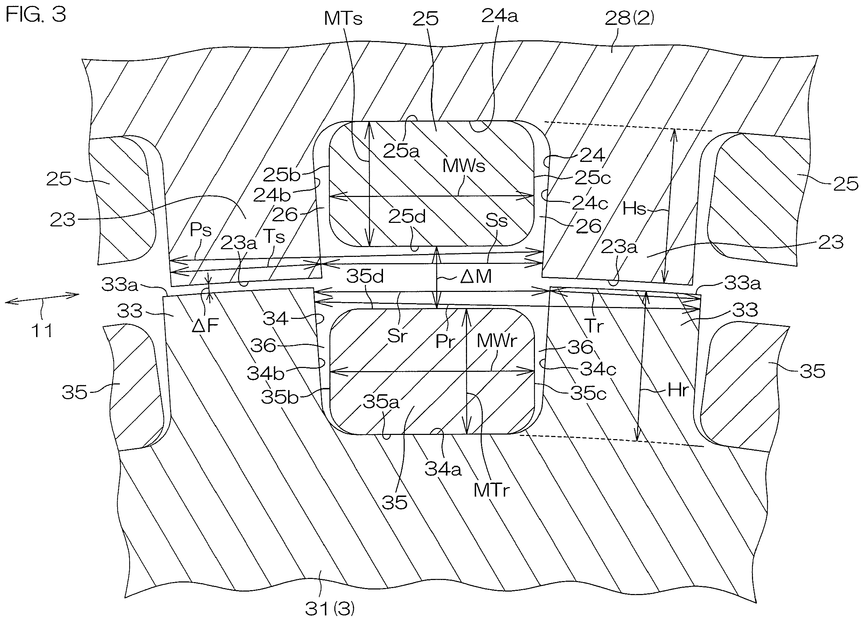

FIG. 3 is a partial enlarged sectional view showing the rotor teeth 33 and the stator teeth 23 on an enlarged scale.

The rotor teeth 33 are linear projections each extending in a direction intersecting the circumferential direction 11 (movement direction). The rotor teeth 33 each project radially outward (away from the rotation axis 10) as having a generally constant width in a sectional plane perpendicular to the rotation axis 10. The rotor teeth 33 each have a top surface 33a facing away from the rotation axis 10. The top surface 33a extends in the circumferential direction 11 about the rotation axis 10. The rotor teeth 33 have substantially congruent sectional shapes, and are arranged equidistantly at a predetermined rotor tooth pitch Pr in the sectional plane perpendicular to the rotation axis 10. The rotor slots 34 provided between the respective adjacent pairs of the rotor teeth 33 are each defined by a pair of generally parallel side surfaces 34b, 34c of the rotor teeth 33 and a bottom surface 34a present between the side surfaces 34b and 34c, and each have a generally rectangular sectional shape. The bottom surface 34a extends in the circumferential direction 11 about the rotation axis 10.

The outer peripheral surfaces (top surfaces 33a) of the rotor teeth 33 each have a circumferential width (hereinafter referred to as "rotor tooth width Tr") as measured in the circumferential direction 11 about the rotation axis 10. On the other hand, the rotor slots 34 each have a circumferential width (hereinafter referred to as "rotor slot width Sr") as measured in the circumferential direction 11 about the rotation axis 10 on a virtual cylindrical surface defined by connecting the outer peripheral surfaces (top surfaces 33a) of the rotor teeth 33. Further, the rotor teeth 33 each have a height (hereinafter referred to as "rotor tooth height Hr") as measured from the bottom surface 34a of the rotor slot 34 to the top surface 33a of the rotor tooth 33.

The rotor slot magnets 35 are rod-shaped inserts (typically, permanent magnet pieces) each made of a hard magnetic material and extending along the rotation axis 10. In this embodiment, the rotor slot magnets 35 each have a generally rectangular sectional shape as taken perpendicularly to the rotation axis 10. The rotor slot magnets 35 each have a bottom surface 35a opposed to the bottom surface 34a of the rotor slot 34, a top surface 35d (opposition surface) located opposite from the bottom surface 35a away from the rotation axis 10, and a pair of side surfaces 35b, 35c extending between the bottom surface 35a and the top surface 35d. Edge portions of the bottom surface 35a and the top surface 35d connected to the side surfaces 35b, 35c are chamfered to be arcuately curved in section. The bottom surface 35a of the rotor slot magnet 35 is bonded (fixed) to the bottom surface 34a of the rotor slot 34, for example, with the adhesive.

The pair of side surfaces 35b, 35c are respectively opposed to the pair of side surfaces 34b, 34c of the rotor slot 34. A gap 36 is provided between the side surface 35b and the opposed side surface 34b of the rotor slot 34 and/or between the side surface 35c and the opposed side surface 34c of the rotor slot 34. Therefore, a magnet width (rotor magnet width) MWr which is equivalent to a distance between the side surfaces 35b and 35c of the rotor slot magnet 35 is smaller than the rotor slot width Sr.

The top surface 35d of the rotor slot magnet 35 serves as the opposition surface which is opposed to the stator 2. In this embodiment, the top surface 35d is recessed from the virtual cylindrical surface defined by connecting the outer peripheral surfaces (top surfaces 33a) of the rotor teeth 33 toward the rotation axis 10. That is, a magnet thickness (rotor magnet thickness) MTr which is equivalent to a distance between the bottom surface 35a and the top surface 35d is smaller than the depth of the rotor slot 34 (which is equivalent to the rotor tooth height Hr). Thus, the rotor slot magnets 35 are respectively entirely accommodated in the rotor slots 34. The top surfaces 35d are substantially parallel to the virtual cylindrical surface. In a strict sense, the top surfaces 35d may each be a flat surface, which is parallel to a plane defined by connecting opening edges of the corresponding rotor slot 34. In this embodiment, the rotor slot magnets 35 respectively inserted in the rotor slots 34 have substantially the same shape and size.

The stator teeth 23 are linear projections each extending in the direction intersecting the circumferential direction 11 (movement direction). The stator teeth 23 respectively extend parallel to the rotor teeth 33. The stator teeth 23 each project radially inward (toward the rotation axis 10) as having a generally constant width in the sectional plane perpendicular to the rotation axis 10. The stator teeth 23 each have a top surface 23a facing toward the rotation axis 10. The top surface 23a extends in the circumferential direction 11 about the rotation axis 10. The stator teeth 23 have substantially congruent sectional shapes, and are arranged equidistantly at a predetermined stator tooth pitch Ps in the sectional plane perpendicular to the rotation axis 10. The stator slots 24 provided between the respective adjacent pairs of the stator teeth 23 are each defined by a pair of generally parallel side surfaces 24b, 24c of the stator teeth 23 and a bottom surface 24a present between the side surfaces 24b and 24c, and each have a generally rectangular sectional shape. The bottom surface 24a extends in the circumferential direction 11 about the rotation axis 10.

The inner peripheral surfaces (top surfaces 23a) of the stator teeth 23 each have a circumferential width (hereinafter referred to as "stator tooth width Ts") as measured in the circumferential direction 11 about the rotation axis 10. On the other hand, the stator slots 24 each have a circumferential width (hereinafter referred to as "stator slot width Ss") as measured in the circumferential direction 11 about the rotation axis 10 on a virtual cylindrical surface defined by connecting the inner peripheral surfaces (top surfaces 23a) of the stator teeth 23. Further, the stator teeth 23 each have a height (hereinafter referred to as "stator tooth height Hs") as measured from the bottom surface 24a of the stator slot 24 to the top surface 23a of the stator tooth 23.

The stator slot magnets 25 are rod-shaped inserts (typically, permanent magnet pieces) each made of a hard magnetic material and extending along the rotation axis 10. In this embodiment, the stator slot magnets 25 each have a generally rectangular sectional shape as taken perpendicularly to the rotation axis 10. The stator slot magnets 25 each have a bottom surface 25a opposed to the bottom surface 24a of the stator slot 24, a top surface 25d (opposition surface) located opposite from the bottom surface 25a on the side of the rotation axis 10, and a pair of side surfaces 25b, 25c extending between the bottom surface 25a and the top surface 25d. Edge portions of the bottom surface 25a and the top surface 25d connected to the side surfaces 25b, 25c are chamfered to be arcuately curved in section. The bottom surface 25a of the stator slot magnet 25 is bonded (fixed) to the bottom surface 24a of the stator slot 24, for example, with the adhesive.

The pair of side surfaces 25b, 25c are respectively opposed to the side surfaces 24b, 24c of the stator slots 24. A gap 26 is defined between the side surface 25b and the opposed side surface 24b of the stator slot 24 and/or between the side surface 25c and the opposed side surface 24c of the stator slot 24. Therefore, a magnet width (stator magnet width) MWs which is equivalent to a distance between the side surfaces 25b and 25c of the stator slot magnet 25 is smaller than the stator slot width Ss.

The top surface 25d of the stator slot magnet 25 serves as the opposition surface which is opposed to the rotor 3. In this embodiment, the top surface 25d is recessed from the virtual cylindrical surface defined by connecting the inner peripheral surfaces (top surfaces 23a) of the stator teeth 23 away from the rotation axis 10. That is, a magnet thickness (stator magnet thickness) MTs which is equivalent to a distance between the bottom surface 25a and the top surface 25d is smaller than the depth of the stator slot 24 (which is equivalent to the stator tooth height Hs). Thus, the stator slot magnets 25 are respectively entirely accommodated in the stator slots 24. The top surfaces 25d are substantially parallel to the virtual cylindrical surface. In a strict sense, the top surfaces 25d may each be a flat surface, which is parallel to a plane defined by connecting opening edges of the corresponding stator slot 24. In this embodiment, the stator slot magnets 25 respectively inserted in the stator slots 24 have substantially the same shape and size.

The rotor slot magnets 35 and the stator slot magnets 25 have substantially the same shape and size.

When the rotor tooth 33 and the stator tooth 23 are opposed to each other, a predetermined gap (space) is defined between the rotor tooth 33 and the stator tooth 23 in an opposition direction, i.e., radially (in the depth direction of the slots 34, 24). This gap is referred to as iron gap ΔF. When the rotor slot 34 and the stator slot 24 are opposed to each other, a predetermined gap is defined between the rotor slot magnet 35 and the stator slot magnet 25 in an opposition direction, i.e., radially (in the depth direction of the slots 34, 24). This gap is referred to as magnet gap ΔM.

If the iron gap ΔF is sufficiently small, the stator tooth pitch Ps is substantially equal to the rotor tooth pitch Pr, and the rotor tooth width Tr is substantially equal to the stator tooth width Ts. Accordingly, the rotor slot width Sr is substantially equal to the stator slot width Ss. Therefore, the stator tooth pitch Ps and the rotor tooth pitch Pr are hereinafter sometimes collectively referred to as tooth pitch P. Further, the rotor tooth width Tr and the stator tooth width Ts are sometimes collectively referred to as tooth width T, and the rotor slot width Sr and the stator slot width Ss are sometimes collectively referred to as slot width S.

In this embodiment, the rotor tooth height Hr and the stator tooth height Hs may be substantially equal to each other. Therefore, the rotor tooth height Hr and the stator tooth height Hs are hereinafter sometimes collectively referred to as tooth height H. In this embodiment, the rotor slot magnet 35 and the stator slot magnet 25 may be hard magnetic inserts (typically, permanent magnet pieces) having substantially the same shape and size. Therefore, the rotor magnet width MWr and the stator magnet width MWs are hereinafter sometimes collectively referred to as magnet width MW, and the rotor magnet thickness MTr and the stator magnet thickness MTs are hereinafter sometimes collectively referred to as magnet thickness MT.

Further, the rotor slot magnets 35 and the stator slot magnets 25 are hereinafter sometimes collectively referred to as slot magnets, and the rotor slots 34 and the stator slots 24 are hereinafter sometimes collectively referred to as slots.

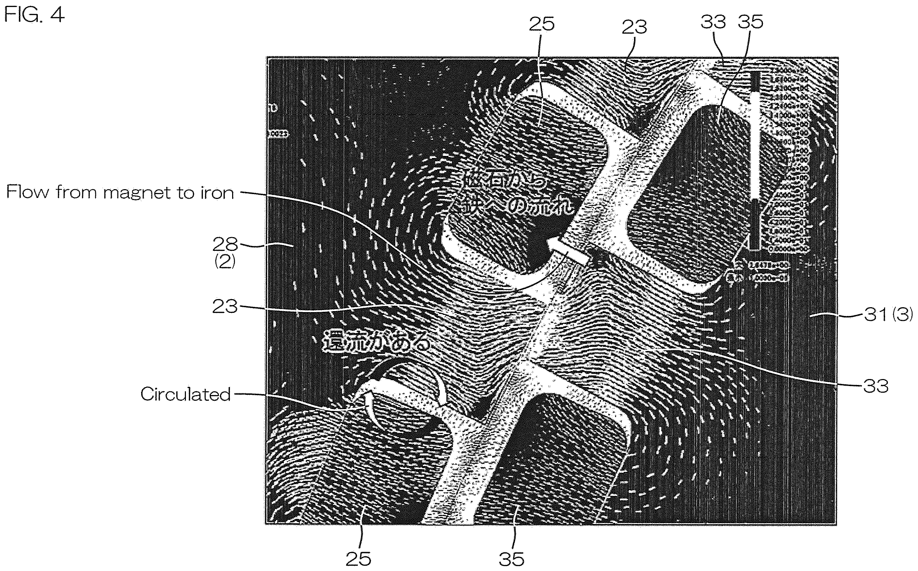

FIG. 4 shows the result of the analysis of the flow of magnetic fluxes around the rotor teeth 33 and the stator teeth 23 by way of example.

Magnetic fluxes flowing across the rotor 3 and the stator 2 are contributable to a torque that causes the rotation of the rotor 3. The magnetic fluxes include: magnetic fluxes flowing out of the stator teeth 23 into the rotor teeth 33; magnetic fluxes flowing out of the stator teeth 23 into the rotor slot magnets 35; magnetic fluxes flowing out of the stator slot magnets 25 into the rotor teeth 33; and magnetic fluxes flowing out of the stator slot magnets 25 into the rotor slot magnets 35.

On the other hand, magnetic fluxes circulating through paths extending through the stator teeth 23 and the stator slot magnets 25 while bypassing the rotor teeth 33 and the rotor slot magnets 35, i.e., magnetic fluxes circulating within the stator 2, are not contributable to the torque. Similarly, magnetic fluxes circulating through paths extending through the rotor teeth 33 and the rotor slot magnets 35 while bypassing the stator teeth 23 and the stator slot magnets 25, i.e., magnetic fluxes circulating within the rotor 3, are not contributable to the torque.

In view of the circulation of the magnetic fluxes, the inventor of the present invention conceived that, if the circulation of the magnetic fluxes can be suppressed, it is possible to increase the magnetic fluxes contributable to the torque generation and, hence, to increase the torque.

A conventional basic design concept for the stepping motor employing the slot magnets is that the slot magnets (hard magnetic bodies) are inserted in the slots without any gaps, and this concept is believed to maximize the torque. However, the above analysis result reveals that the structure with the slot magnets inserted in the slots without any gaps enhances the circulation of the magnetic fluxes, and the torque can be rather advantageously increased by providing the gaps between the slot magnets and the slot side surfaces.

If the magnet width MW is excessively reduced, on the other hand, the magnetic fluxes are less efficiently concentrated on the teeth, whereby the magnetic fluxes flowing across the stator 2 and the rotor 3 are liable to decrease.

Therefore, the gaps 26, 36 to be provided between the side surfaces of the slots 24, 34 and the side surfaces of the slot magnets 25, 35 should be each dimensioned in an optimum range so as to maximize the torque.

Based on this conception, the inventor of the present invention conducted studies about a relationship between the magnet width MW and the torque in order to investigate into a relationship between the gaps 26, 36 and the torque. The results of the studies will be described below.

For the description, technical terms are defined as follows. First, the term "magnet width ratio" means the ratio of the magnet width MW to the slot width S. The term "tooth width ratio" means the ratio of the tooth width T to the tooth pitch P (which is equal to the sum of the slot width S and the tooth width T). The term "tooth height/width ratio" means the ratio of the tooth height H to the tooth width T. These terms are collectively shown below.

$$\text{Magnet width ratio} = \text{Magnet width MW/Slot width S}$$

$$\text{Tooth width ratio} = \text{Tooth width T/Tooth pitch P}$$

$$= \text{Tooth width T/(Slot width S + Tooth width T)}$$

$$\text{Tooth height/width ratio} = \text{Tooth height H/Tooth width T}$$

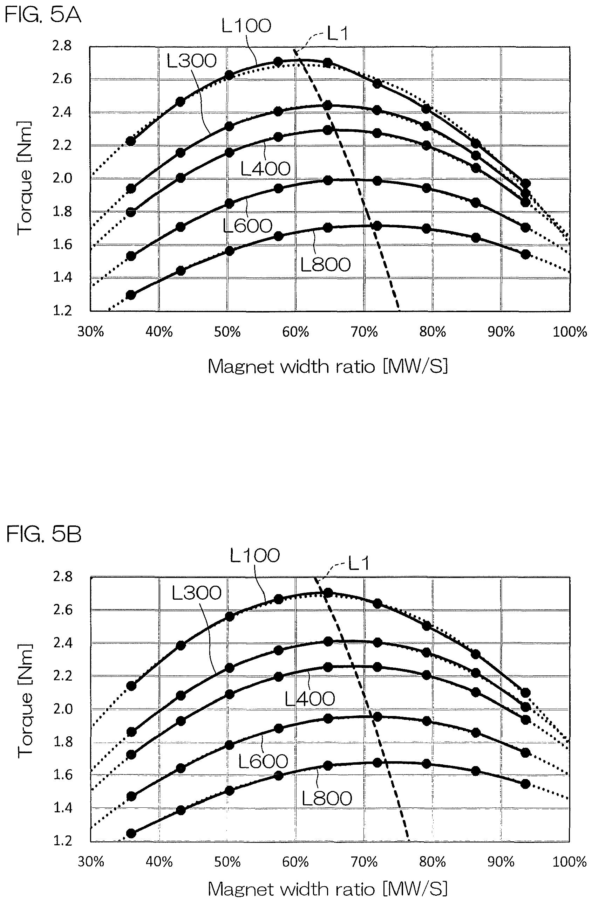

FIGS. 5A to 5C show the results of a torque analysis performed by analyzing the torque with respect to various magnet thicknesses MT and various magnet widths MW by FEM (finite element method) with the iron gap $\Delta$F set to 40 $\mu$m, with the tooth width ratio T/P set to 39%, and with the tooth height/width ratio H/T set to 1.0. It is empirically known that the torque is maximized in the stepping motor when the tooth width ratio T/P is about 40% (e.g., 30% to 45%).

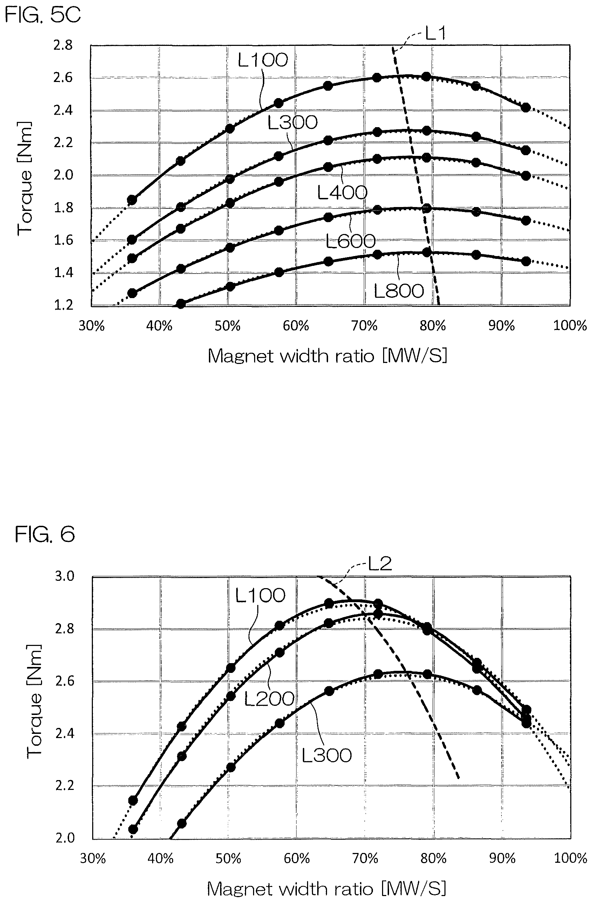

FIG. 5A shows analysis results obtained when strong sintered neodymium magnets each having an energy product of 49 MGOe and a residual magnetic flux density of 1.4 T were used as the slot magnets. FIG. 5B shows analysis results obtained when weak sintered neodymium magnets each having an energy product of 42 MGOe and a residual magnetic flux density of 1.3 T were used as the slot magnets. FIG. 5C shows analysis results obtained when samarium magnets (e.g., samarium-cobalt magnets) each having an energy product of 26 MGOe and a residual magnetic flux density of 1.0 T were used as the slot magnets. The sintered neodymium magnets are shown as the neodymium magnets by way of example, and other examples of the neodymium magnets include magnets of neodymium-iron-boron alloys.

In FIGS. 5A to 5C, lines L100, L300, L400, L600 and L800 respectively show changes in generated torque with respect to the magnet width ratio MW/S. The lines L100, L300, L400, L600 and L800 show analysis results obtained when magnet gaps ΔM were set to 100 μm, 300 μm, 400 μm, 600 μm and 800 μm, respectively, by adjusting the magnet thickness MT.

Comparison of the lines L100, L300, L400, L600 and L800 indicates that the torque tends to be increased as the magnet thickness MT is increased to cause the top surfaces 25d, 35d (gap surfaces) of the slot magnets to approach the top surfaces 23a, 33a (tooth surfaces) of the teeth 23, 33. The comparison also indicates that the torque is maximized irrespective of the magnet gap ΔM when the magnet width MW is a specific width. For a maximum torque design, as shown by a broken line L1, it is preferred to reduce the magnet width MW as the magnet gap ΔM decreases.

Comparison of FIGS. 5A to 5C indicates that, with the use of magnets each having a residual magnetic flux density of about 1 T (e.g., 1.0 T to 1.4 T), the torque is maximized irrespective of the magnetic flux density when the magnet width MW is the specific width.

In examples of FIG. 5A, it is preferred to set the magnet width ratio MW/S to 60% to 75% (preferably 62% to 72%) for the maximum torque design. In examples of FIG. 5B, it is preferred to set the magnet width ratio MW/S to 63% to 76% (preferably 65% to 73%) for the maximum torque design. In examples of FIG. 5C, it is preferred to set the magnet width ratio MW/S to 73% to 80% (preferably 75% to 80%) for the maximum torque design.

Where the magnet width ratio MW/S is set within a range of 60% to 80%, a great torque generating design is possible irrespective of the type of the magnets and the magnet gap ΔM.

FIG. 6 shows analysis results obtained under substantially the same conditions as in the examples of FIG. 5A, except that the tooth height/width ratio H/T was set to 0.65, when sintered neodymium magnets each having an energy product of 49 MGOe and a residual magnetic flux density of 1.4 T were used. Lines L100, L200 and L300 show changes in generated torque with respect to the magnet width ratio MW/S when the magnet gap ΔM was set to 100 μm, 200 μm and 300 μm, respectively, by adjusting the magnet thickness MT. A broken line L2 shows a relationship between the magnet gap and the magnet width for the maximum torque.

As compared with the exemplary analysis shown in FIG. 5A, the same magnet gap ΔM is provided, while the tooth height H (i.e., the slot depth) is reduced and the magnet thickness MT is correspondingly reduced. Specifically, the magnet thickness MT when the magnet gap ΔM is 100 μm (line L100) in FIG. 6 is equal to the magnet thickness MT when the magnet gap ΔM is 800 μm (line L800) in FIG. 5A.

As described in the exemplary analyses shown in FIGS. 5A to 5C, the tooth height/width ratio of the stepping motor is generally set to about 1. However, the exemplary analysis shown in FIG. 6 indicates that the torque is still maximized when the magnet width ratio MW/S is the specific width even if the tooth height/width ratio H/T is reduced.

The exemplary analysis shown in FIG. 6 indicates that the magnet width ratio MW/S is preferably set in a range of 63% to 84% (preferably 68% to 76%) for the maximum torque design. Further, where the magnet width ratio MW/S is set in a range of 60% to 80%, the great torque generating design is possible irrespective of the magnet gap ΔM.

The magnet gap ΔM is preferably not greater than 800 μm, more preferably not greater than 400 μm, still more preferably not greater than 200 μm. The magnet gap ΔM is preferably not less than the iron gap ΔF (e.g., 40 μm), and may be not less than 100 μm.

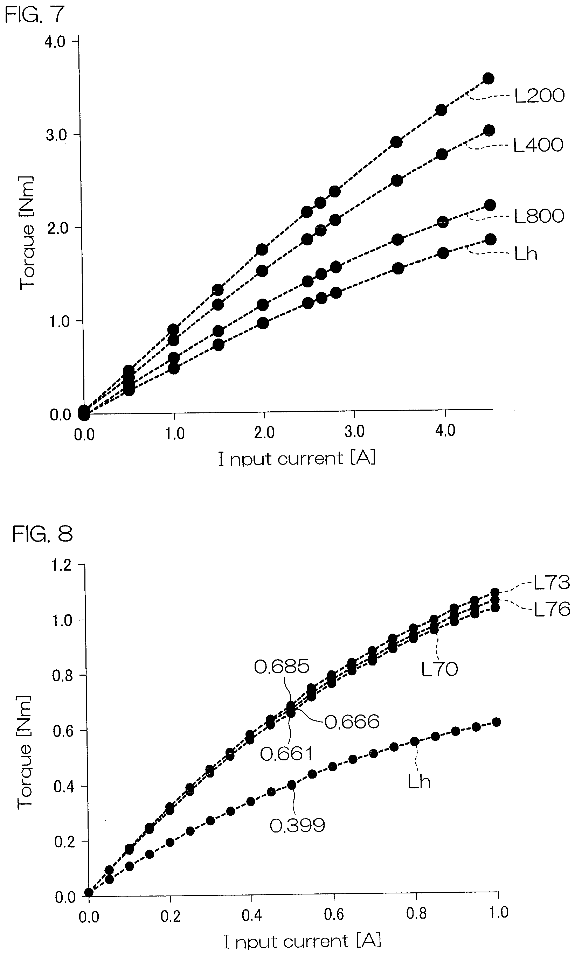

In inventive examples, two-phase stepping motors of slot magnet type each having a mounting angle size of 60 mm, a motor length of 40 mm, a rotor inertia moment of $370 \times 10^{-7}$ kgm$^2$, a rotor tooth number of 50, a tooth width ratio T/P of 39%, and a tooth height/width ratio H/T of 1.0 were prepared. Then, the magnet width ratio MW/S was set to 75%, and the magnet gap ΔM was narrowed by increasing the magnet thickness MT. Sintered neodymium magnets each having a residual magnetic flux density of 1.4 T were used as the slot magnets. Current-torque characteristics were measured when the stepping motors of the inventive examples were each driven by two-phase excitation. In FIG. 7, actual measurement values are shown by lines L200, L400 and L800. Actual measurement values obtained by using a hybrid type stepping motor of a comparative example having the same physical construction, the same motor length and the same winding specification are shown by a line Lh.

The lines L200, L400 and L800 correspond to the examples in which the magnet gap ΔM was set to 200 μm, 400 μm and 800 μm, respectively. These lines indicate that the torque significantly varies according to the magnet gap ΔM. Further, where the magnet gap ΔM is 200 μm (line L200), the torque is generally doubled as compared with the torque provided by the hybrid type (line Lh).

In other inventive examples, two-phase stepping motors of slot magnet type each having a mounting angle size of 42 mm, a motor length of 52 mm, a rotor inertia moment of $55 \times 10^{-7}$ kgm$^2$, a rotor tooth number of 50, a tooth width ratio T/P of 39%, and a tooth height/width ratio H/T of 1.0 were prepared. Then, the magnet gap $\Delta$M was set to 200 $\mu$m, and the magnet width ratio MW/S was set to 76% to 70%. Sintered neodymium magnets each having a residual magnetic flux density of 1.4 T were used as the slot magnets. Current-torque characteristics were measured when the stepping motors of the inventive examples were each driven by two-phase excitation. In FIG. 8, actual measurement values are shown by lines L70, L73 and L76. Actual measurement values obtained by using a hybrid type stepping motor of a comparative example having the same physical construction, the same motor length and the same winding specification are shown by a line Lh.

The lines L70, L73 and L76 correspond to the examples in which the magnet width ratio MW/S was set to 70%, 73% and 76%, respectively. A comparison between FIG. 7 and FIG. 8 indicates that the stepping motors of the slot magnet type, even if having different mounting angle sizes, are superior in torque generation to the hybrid type stepping motors. Further, the actual measurements indicate that, when the magnet width ratio MW/S is 73% (line L73), the torque is maximized.

Although the tooth pitches P of the rotor and the stator may take various values, the torque can be increased by using magnets (slot magnets) each having a proper width according to the tooth pitch P.

While the embodiment of the present invention has thus been described specifically, the invention may be embodied in some other ways. In the aforementioned embodiment, the stepping motor mainly described above is configured so that the rotor 3 is rotated about the rotation axis 10 by way of example, but the present invention is applicable to a stepping motor having a linear motor configuration. That is, the stepping motor may be configured so that the stator is disposed along a linear path and the moving element is movable along the stator.

In the aforementioned embodiment, the stator slot magnets 25 and the rotor slot magnets 35 are provided by way of example, but only the rotor slot magnets 35 may be provided with the stator slot magnets 25 obviated, or only the stator slot magnets 25 may be provided with the rotor slot magnets 35 obviated.

While the embodiments of the present invention have been described in detail, these embodiments are merely specific examples that are illustrative of the technical principles of the present invention but not limitative of the invention. The spirit and scope of the present invention are limited only by the appended claims.

This application claims the priority benefit of Japanese Patent Application No. 2020-77740 filed on April 24, 2020, the disclosure of which is entirely incorporated herein by reference.

REFERENCE SIGNS LIST

1: Stepping motor
2: Stator
3: Rotor (moving element)
10: Rotation axis
11: Circumferential direction (movement direction)
23: Stator teeth
24: Stator slots
25: Stator slot magnets
26: Gaps
28: Main poles
33: Rotor teeth
34: Rotor slots (moving element slots)
35: Rotor slot magnets (moving element slot magnets)
36: Gaps
Pr: Rotor tooth pitch
Tr: Rotor tooth width
Sr: Rotor slot width
Hr: Rotor tooth height
MWr: Rotor magnet width
MTr: Rotor magnet thickness
Ps: Stator tooth pitch
Ts: Stator tooth width
Ss: Stator slot width
Hs: Stator tooth height
MWs: Stator magnet width

MTs: Stator magnet thickness
ΔF: Iron gap
M: Magnet gap

**Claims**

1. A stepping motor comprising:

   a stator; and
   a moving element disposed in opposed relation to the stator and movable in a predetermined movement direction with respect to the stator;
   wherein the stator comprises a plurality of main poles, windings for the respective main poles, a plurality of stator teeth disposed on each of the main poles in opposed relation to the moving element and spaced from each other in the movement direction, and stator slots provided between respective adjacent pairs of the stator teeth;
   wherein the moving element comprises a plurality of moving element teeth disposed in opposed relation to the stator and spaced from each other in the movement direction, and moving element slots provided between respective adjacent pairs of the moving element teeth;
   wherein slot magnets of hard magnetic inserts each magnetized in a slot depth direction are respectively provided in the stator slots and/or the moving element slots;
   wherein the slot magnets each have a width that is 60% to 80% of a width of each of the slots as measured in the movement direction.

2. The stepping motor according to claim 1,

   wherein the moving element is a rotor which is rotatable about a predetermined rotation axis,
   wherein the movement direction is a circumferential direction about the rotation axis.

3. The stepping motor according to claim 1 or 2,

   wherein the slot magnets comprises stator slot magnets of hard magnetic inserts each magnetized in a stator slot depth direction and respectively provided in the stator slots, and moving element slot magnets of hard magnetic inserts each magnetized in a moving element slot depth direction and respectively provided in the moving element slots,
   wherein the stator slot magnets and the moving element slot magnets are magnetized so that, when the stator slot magnets are opposed to the moving element slot magnets, the opposed magnets have opposite polarities.

4. The stepping motor according to any one of claims 1 to 3, wherein the slot magnets comprise samarium magnets.

5. The stepping motor according to any one of claims 1 to 3, wherein the slot magnets comprise neodymium magnets.

FIG. 1

FIG. 2

FIG. 3

EP 4 142 126 A1

FIG. 4

Flow from magnet to iron

28
(2)

23

Circulated

25    23    33  35

31 (3)

33

25    35

FIG. 5A

FIG. 5B

FIG. 5C

FIG. 6

FIG. 7

FIG. 8

| | **INTERNATIONAL SEARCH REPORT** | International application No. |
|---|---|---|
| | | PCT/JP2021/008000 |

**A. CLASSIFICATION OF SUBJECT MATTER**
H02K 37/04(2006.01)i
FI: H02K37/04 501K; H02K37/04 501C; H02K37/04 502
According to International Patent Classification (IPC) or to both national classification and IPC

**B. FIELDS SEARCHED**

Minimum documentation searched (classification system followed by classification symbols)
H02K37/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3-203557 A (SHIBAURA ENGINEERING WORKS CO., LTD.) 05 September 1991 (1991-09-05) specification, page 1, lower right column, line 3 to page 2, lower left column, line 4, page 3, upper left column, lines 6-12, fig. 4-7 | 1-5 |
| Y | JP 2015-186322 A (MITSUBA CORP.) 22 October 2015 (2015-10-22) paragraphs [0013]-[0024], fig. 1-8 | 1-5 |
| A | CD-ROM of the specification and drawings annexed to the request of Japanese Utility Model Application No. 1291/1992 (Laid-open No. 59647/1993) (NEC ENGINEERING, LTD.) 06 August 1993 (1993-08-06) paragraphs [0004]-[0005], [0016]-[0017], [0025]-[0027], fig. 3-6 | 1-5 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April 2021 (22.04.2021) | 11 May 2021 (11.05.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application no.

PCT/JP2021/008000

| Patent Documents referred in the Report | Publication Date | Patent Family | Publication Date |
|---|---|---|---|
| JP 3-203557 A | 05 Sep. 1991 | (Family: none) | |
| JP 2015-186322 A | 22 Oct. 2015 | (Family: none) | |
| JP 5-59647 U1 | 06 Aug. 1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI719958126 B
- JP 2020077740 A